# EUROPÄISCHE PATENTSCHRIFT

(11) **EP 4 439 118 B1**
(45) Veröffentlichungstag und Bekanntmachung des Hinweises auf die Patenterteilung: **27.08.2025**
(21) Anmeldenummer: 24162558.1
(22) Anmeldetag: 11.03.2024
(51) Int. Cl.: G01S 13/10, G01S 13/88, G01S 7/292, G01S 7/40, G01F 23/284

(54) **VERFAHREN ZUM BETREIBEN EINES RADARSENSORS ZUR ENTFERNUNGSMESSUNG UND ENTSPRECHENDER RADARSENSOR**
METHOD FOR OPERATING A RADAR SENSOR FOR DISTANCE MEASUREMENT AND CORRESPONDING RADAR SENSOR
PROCÉDÉ DE FONCTIONNEMENT D'UN CAPTEUR RADAR DESTINÉ À LA TÉLÉMÉTRIE ET CAPTEUR RADAR CORRESPONDANT

(30) Priorität: 27.03.2023 DE 102023107687
(43) Veröffentlichungstag der Anmeldung: 02.10.2024
(73) Patentinhaber: Krohne S.A.S., 26103 Romans-sur-Isere Cedex (FR)
(72) Erfinder: Grosdidier, Samuel, 26300 Beauregard-Baret (FR); Dubray, Olivier, 26300 Chatuzange-Le-Goubet (FR)
(74) Vertreter: Gesthuysen Patentanwälte

(56) Entgegenhaltungen:
- EP-A1- 2 442 129
- DE-A1- 102012 101 725
- US-A1- 2017 211 963

## Beschreibung

Die Erfindung betrifft ein Verfahren zum Betreiben eines Radarsensors zur Entfernungsmessung, wobei der Radarsensor ein Sendesignal aussendet, ein Empfangssignal mit einem zeitlich ausgedehnten Amplitudenverlauf umfassend wenigstens einen ersten Reflexionsimpuls mit einer ersten Empfangszeit und einer ersten Amplitude und einen zweiten Reflexionsimpuls mit einer zweiten Empfangszeit und einer zweiten Amplitude empfängt, wobei in einem Detektionsschritt aus dem Empfangssignal eine erste ermittelte Empfangszeit und eine erste ermittelte Amplitude als Näherungswerte für die erste Empfangszeit und die erste Amplitude des ersten Reflexionsimpulses und eine zweite ermittelte Empfangszeit und eine zweite ermittelte Amplitude als Näherungswerte für die zweite Empfangszeit und die zweite Amplitude des zweiten Reflexionsimpulses ermittelt werden, und wobei aus den ermittelten Empfangszeiten Abstandsinformationen berechnet werden. Darüber hinaus betrifft die Erfindung auch einen Radarsensor zur Entfernungsmessung, mit einem Sendeelement zum Aussenden eines Sendesignals, mit einem Empfangselement zum Empfangen eines Sendesignals und mit einer Signalverarbeitungseinheit, wobei die Signalverarbeitungseinheit das zuvor genannte Verfahren im Betrieb des Radarsensors ausführt.

Radarsensoren der vorgenannten Art sind seit vielen Jahren bekannt, beispielsweise aus dem Bereich der Prozessmesstechnik, bei dem eine typische Aufgabe beispielsweise darin besteht, Füllstände eines Mediums in einem Behälter zu bestimmen. Im Wesentlichen gibt es zwei Messprinzipien, anhand derer Abstandsinformationen gewonnen werden. Beim Impulsradar wird ein zeitlich eng begrenzter Radar-Impuls als Sendesignal ausgesendet, schließlich von einem Objekt im Ausbreitungspfad des Sendesignals reflektiert und das reflektierte Sendesignal wird dann als Empfangssignal wieder von dem Radarsensor aufgenommen. Aus der Signallaufzeit lässt sich unmittelbar der Abstand zu dem Reflexionsobjekt bestimmen aufgrund der bekannten Ausbreitungsgeschwindigkeit des Sendesignals (Lichtgeschwindigkeit im Vakuum oder ggf. in einem bekannten Medium). EP2442129A1 offenbart ein Impulsradar zur Abstandsmessung in einem Füllstandmessgerät.

Beim FMCW-Radar (frequency modulated continuoues wave) wird ein frequenzmoduliertes Dauer signal als Sendesignal emittiert, das von dem Reflexionsobjekt ebenfalls reflektiert wird und als frequenzmoduliertes Dauersignal zu dem Radarsensor als Empfangssignal zurückkehrt. Aufgrund der bekannten zeitlichen Änderungsrate der Frequenz des Radarsignals ist die Differenzfrequenz zwischen dem Sendesignal und dem Empfangssignal ein unmittelbares Maß für den zeitlichen Versatz beider Signale, damit für die Laufzeit des Empfangssignals und für die Entfernung des Reflexionsobjekts. Nach beiden Verfahren ist es möglich, das Empfangssignal über eine Zeitachse aufzutragen, auch wenn beim FMCW-Radar zunächst im Frequenzbereich gearbeitet wird. Das hier betrachtete und im Folgenden erläuterte Verfahren lässt sich auf beide Methoden der Abstandsmessung anwenden. Im Folgenden wird immer die Betrachtung im Zeitbereich gewählt.

Radarimpulse sind nicht im mathematischen Sinne Impulse, sondern haben vielmehr auch eine zeitliche Ausdehnung, in der die Signalintensität ansteigt, ein Maximum erreicht und dann wieder abfällt. Genau so haben auch reflektierte Radarimpulse, also die Reflexionsimpulse, eine zeitliche Ausdehnung. Diese kann nach Durchlaufen der Reflexionsstrecke aufgrund verschiedener Eigenschaften des Mediums in der Reflexionsstrecke und möglicherweise auch des Reflexionsobjektes noch größer sein als die zeitliche Ausdehnung des generierten Sendesignals vor Durchlaufen der Reflexionsstrecke.

Problematische Messsituationen entstehen dann, wenn zwei Reflexionsimpulse zeitlich so nah aneinander bei dem Radarsensor eingehen, dass sie aufgrund ihrer eigenen zeitlichen Ausdehnung ineinander übergehen und praktisch nur noch als ein einziges Empfangssignal empfangen werden. Sehr nah beieinanderliegen Reflexionsobjekte können zum Beispiel durch dünne Schichten von Flüssigkeiten (z. B. dünne Ölschicht auf Wasser) gebildet werden oder durch ortsveränderliche Objekte im Medium, die den Erfassungsbereich des Radars zeitweise durchlaufen (z. B. Rührvorrichtung). Wenn die Betrachtung zunächst auf lediglich zwei sich überlagernde Reflexionsimpulse beschränkt wird, dann liegt in dem aufgezeigten Beispiel die Situation vor, dass das Empfangssignal einen zeitlich ausgedehnten Amplitudenverlauf hat und einen ersten Reflexionsimpuls mit einer ersten Empfangszeit und einer ersten Amplitude und einen zweiten Reflexionsimpuls mit einer zweiten Empfangszeit und einer zweiten Amplitude umfasst. Diese Beschreibung geht mit der Vorstellung einher, dass die Reflexionsimpulse einen charakteristischen Amplitudenverlauf haben, wobei mit der Amplitude jeweils die Maximalamplitude gemeint ist und mit der Empfangszeit der Zeitpunkt, zu dem die maximale Amplitude vorliegt. Die Amplituden und die Empfangszeiten der beiden Reflexionsimpulse sind die tatsächlichen, also fehlerfrei charakteristischen Parameter der Reflexionsimpulse.

Im Stand der Technik sind verschiedene Methoden bekannt, um in einem Detektionsschritt aus dem Empfangssignal den ersten Reflexionsimpuls und den zweiten Reflexionsimpuls herauszuarbeiten, sodass möglichst gute Schätzungen für die erste Empfangszeit und die zweite Empfangszeit des ersten Reflexionsimpulses und des zweiten Reflexionsimpulses erhalten werden. Das ist damit gemeint, wenn es heißt, dass in dem Detektionsschritt aus dem Empfangssignal eine erste ermittelte Empfangszeit und eine erste ermittelte Amplitude als Näherungswerte für die erste Empfangszeit und die erste Amplitude des ersten Reflexionsimpulses ermittelt werden, und dass aus dem Empfangssignal natürlich auch eine zweite ermittelte Empfangszeit und eine zweite ermittelte Amplitude als Näherungswerte für die zweite Empfangszeit und die zweite Amplitude des zweiten Reflexionsimpulses ermittelt werden.

Im Stand der Technik ist beispielsweise bekannt, den ersten Reflexionsimpuls und den zweiten Reflexionsimpuls näherungsweise aus dem Empfangssignal herauszuarbeiten durch Anwendung einer inversen Faltungsoperation (Dekonvolution) auf das Empfangssignal gefaltet mit der Übertragungsfunktion der Reflexionsstrecke, wobei die Übertragungsfunktion der Reflexionsstrecke bekanntlich die Impulsantwort der Reflexionsstrecke ist. In der Praxis werden die Fourier-Transformierten des Empfangssignals und der Impulsantwort der Reflexionsstrecke multipliziert (was im Frequenzbereich der Faltung im Zeitbereich entspricht) und darauf (gegebenenfalls nach einer Normierung) die inverse Fourier-Transformation angewendet. Es ist ohne Weiteres ersichtlich, dass diese Vorgehensweise relativ aufwendig ist und mit den begrenzten Möglichkeiten (Rechenkapazität und auch Energieversorgung) von Radarsensoren, wie sie im Industriebereich häufig eingesetzt werden (insbesondere 2-Leiter-Technik), nicht oder nur schlecht durchführbar ist.

Aufgabe der vorliegenden Erfindung ist es daher, das eingangs beschriebene Verfahren so auszugestalten, dass mit vergleichsweise geringem Aufwand die ermittelten Amplituden und die ermittelten Empfangszeiten als Näherungswerte für die Parameter der Reflexionsimpulse bestimmt werden können.

Die hergeleitete Aufgabe ist bei dem eingangs genannten Verfahren und bei dem eingangs genannten Radarsensor zunächst und im Wesentlichen gelöst durch die Merkmale der unabhängigen Patentansprüche, nämlich dadurch, dass im Detektionsschritt zunächst wenigstens ein Referenz-Reflexionsimpuls mit einer Referenz-Amplitude, einer Referenz-Empfangszeit und einem Referenz-Intensitätsverlauf ermittelt wird. Der Referenz-Reflexionsimpuls wird praktisch als Blaupause für mögliche Reflexionsimpulse verwendet. Dies geschieht unter der Annahme, dass das Empfangssignal durch eine Kombination derartiger Referenz-Reflexionsimpulse, die gegeneinander zeitlich verschoben und unterschiedliche Amplituden aufweisen können, angenähert werden kann. Die Ermittlung des Referenz-Reflexionsimpulses kann darin bestehen, einen berechneten Referenz-Reflexionsimpuls oder einen zuvor in ungestörter Umgebung messtechnisch erfassten Reflexionsimpuls zu verwenden. Der messtechnisch erfasste Reflexionsimpuls kann in der tatsächlichen Einbausituation von dem eingebauten Radarsensor selbst erfasst worden sein, es kann sich aber auch um einen unter Werksbedingungen - beispielweise beim werksseitigen Kalibrieren - erfassten Reflexionsimpuls handeln, auch um den von einem anderen Radarsensor erfassten Reflexionsimpuls.

In einem initialen Detektionsschritt werden dann ein initiales Maximum als Wert für die erste ermittelte Amplitude gesetzt und eine initiale Empfangszeit wird als Wert für die erste ermittelte Empfangszeit gesetzt. Für das initiale Maximum und die initiale Empfangszeit können im einfachsten Fall Schätzwerte verwendet werden. Das nachfolgend vollständig beschriebene Verfahren arbeitet iterativ und konvergiert gegen die tatsächliche Lösung. Wie bei anderen iterativen Verfahren kann durch geeignete Wahl der initialen Werte die Anzahl der Iterationen reduziert werden, um eine geforderte Genauigkeit zu erreichen.

Für das initiale Maximum und/oder die initiale Empfangszeit können auch bekannte Werte eingesetzt werden, beispielsweise von Hindernissen im Detektionsbereich des Radarsensors. In einem solchen Fall wäre beispielsweise die initiale Empfangszeit bekannt, möglicherweise aber nicht die initiale Amplitude, für die dann ein Schätzwert eingesetzt werden könnte. Im Verlauf des Verfahrens würde sich dann die Empfangszeit infolge der iterativen Berechnung praktisch nicht ändern, gleichwohl aber die Amplitude.

In einem ersten Teil-Detektionsschritt wird nun ein Differenz-Empfangssignal dadurch erzeugt, dass von dem Empfangssignal der Referenz-Reflexionsimpuls mit der ersten ermittelten Amplitude als Referenz-Amplitude und mit der ersten ermittelten Empfangszeit als Referenz-Empfangszeit subtrahiert wird. Der Referenz-Reflexionsimpuls wird also parametriert mit den charakteristischen Daten (Amplitude und Empfangszeit), die in dem initialen Detektionsschritt ermittelt worden sind. Aus dem Empfangssignal wird demnach die erste Näherung eines der Reflexionsimpulse abgezogen. Aus dem daraus resultierenden Differenz-Empfangssignal wird mittels Spitzenerkennung die zweite ermittelte Empfangszeit und die zweite ermittelte Amplitude bestimmt. Das Empfangssignal wird also bereinigt von der ersten Schätzung eines der beiden Reflexionsimpulse, sodass im Differenz-Empfangssignal der andere Reflexionsimpuls deutlicher hervortritt.

In einem zweiten Teil-Detektionsschritt wird das Differenz-Empfangssignal dann erneut erzeugt, indem von dem Empfangssignal der Referenz-Detektionsimpuls mit der zweiten ermittelten Amplitude als Referenzamplitude und mit der zweiten ermittelten Empfangszeit als Referenz-Empfangszeit subtrahiert wird. Dadurch wird aus dem Empfangssignal das Differenz-Empfangssignal erhalten, in dem nunmehr die Auswirkungen des ersten Reflexionsimpulses deutlicher hervortreten. Aus dem Differenz-Empfangssignal werden dann mittels Spitzenerkennung die erste ermittelte Empfangszeit und die erste ermittelte Amplitude bestimmt als nunmehr beste Näherung für die entsprechenden Werte des ersten Reflexionsimpulses.

Gemäß einer bevorzugten Ausgestaltung des Verfahrens ist vorgesehen, dass der erste Teil-Detektionsschritt und der zweite Teil-Detektionsschritt in mehreren Iterationen hintereinander ausgeführt werden. Dadurch wird eine stetige Verbesserung der Näherungswerte für die erste Empfangszeit und die erste Amplitude des ersten Reflexionsimpulses und für die zweite ermittelte Empfangszeit und die zweite ermittelte Amplitude erreicht.

Bei einer bevorzugten Weiterbildung des Verfahrens werden die Iterationen abgebrochen, wenn die Veränderung der ersten ermittelten Empfangszeit oder/und die Veränderung der zweiten ermittelten Empfangszeit von einem Iterationsschritt zum darauffolgenden Iterationsschritt unter eine vorgegebene Grenze fällt bzw. fallen. Dadurch wird das Konvergieren gegen den Endzustand der entsprechenden Näherungswerte zumindest für die Empfangszeiten der Reflexionsimpulse bei Unterschreiten einer Näherungsgrenze abgebrochen.

Bei einem alternativen Abbruchkriterium ist vorgesehen, dass die Iterationen abgebrochen werden, wenn ein mit dem Differenz-Empfangssignal verbundenes Maß einen Grenzwert unterschreitet, insbesondere wobei das mit dem Differenz-Empfangssignal verbundene Maß und der diesbezügliche Grenzwert ein Leistungsmaß des Differenz-Empfangssignalsist.

Bei einem weiteren alternativen Abbruchkriterium ist vorgesehen, dass die Iterationen abgebrochen werden, wenn ein mit einem vollständigen Differenz-Empfangssignal verbundenes Maß einen Grenzwert unterschreitet. Das vollständige Differenz-Empfangssignal wird erhalten, indem von dem Empfangssignal sowohl der Referenz-Reflexionsimpuls mit der ersten ermittelten Amplitude als Referenz-Amplitude und mit der ersten ermittelten Empfangszeit als Referenz-Empfangszeit subtrahiert wird als auch der Referenz-Reflexionsimpuls mit der zweiten ermittelten Amplitude als Referenz-Amplitude und mit der zweiten ermittelten Empfangszeit als Referenz-Empfangszeit subtrahiert wird. Vorzugsweise steht der Grenzwert mit der Leistung des vollständigen Differenz-Empfangssignals in Verbindung, die Amplitudenwerte gehen hier also quadratisch in das Maß ein.

Bei einer bevorzugten Ausgestaltung des Verfahrens ist vorgesehen, dass im initialen Detektionsschritt ein initiales Maximum im Amplitudenverlauf des Empfangssignals und dessen initiale Empfangszeit ermittelt werden und das initiale Maximum als Wert für die erste ermittelte Amplitude und die initiale Empfangszeit als Wert für die erste ermittelte Empfangszeit gesetzt wird, werden. Es wird also ein Maximum in dem Empfangssignal detektiert und es wird davon ausgegangen, dass dieses Maximum und die mit dem initialen Maximum verbundene initiale Empfangszeit charakteristisch sind für einen der empfangenen Reflexionsimpulse. Bei dieser Vorgehensweise werden recht gute Anfangswerte erhalten, jedenfalls im Regelfall bessere als bei Verwendung von Schätzwerten ohne weiteren Anhaltspunkt.

Gemäß einer bevorzugten Ausgestaltung des Verfahrens ist vorgesehen, dass im initialen Detektionsschritt das absolute Maximum im Amplitudenverlauf des Empfangssignals als initiales Maximum verwendet wird. Der Vorteil besteht hier darin, dass das absolute Maximum mit großer Sicherheit bestimmt werden kann.

Bei einer bevorzugten Ausgestaltung des Verfahrens wird der Referenz-Reflexionsimpuls dadurch ermittelt, dass der Referenz-Reflexionsimpuls im Radarsensor abgespeichert worden ist und nur ausgelesen wird. Vorzugsweise werden mehrere Referenz-Reflexionsimpulse in dem Radarsensor abgespeichert, beispielsweise für verschiedene Medien in der Laufstrecke des Sendesignals. Das kann sinnvoll sein, weil verschiedene Medien das Reflexionssignal auf seinem Weg vom Radarsensor zum Reflexionsobjekt und zurück zum Radarsensor unterschiedlich beeinflussen und verformen können, beispielsweise aufgrund abweichender Dispersionseigenschaften.

Bei dem Referenz-Reflexionsimpuls kann es sich um einen berechneten Reflexionsimpuls handeln oder um einen gemessenen Reflexionsimpuls.

Bei einer anderen Ausgestaltung des Verfahrens wird der Referenz-Reflexionsimpuls dadurch ermittelt, dass der Referenz-Reflexionsimpuls von dem Radarsensor in der eingerichteten Einsatzumgebung aufgenommen wird. Das bedeutet, dass der Radarsensor als Sendesignal einen Sendeimpuls - wie im nachfolgenden Betrieb auch - in die Laufstrecke aussendet, wobei darauf geachtet wird, dass nur ein einziger Reflexionsimpuls resultiert und als Empfangssignal empfangen wird. Der Vorteil dieses Vorgehens besteht darin, dass der Referenz-Reflexionsimpuls tatsächlich an die Übertragungseigenschaften der Reflexionsstrecke angepasst ist. Der gemessene Reflexionsimpuls kann auch unter Werksbedingungen, beispielsweise beim werksseitigen Kalibrieren, aufgenommen worden sein. Der Referenz-Reflexionsimpuls kann auch von einem anderen Radarsensor aufgenommen worden sein.

Eine bevorzugte Ausgestaltung der zuvor genannten Verfahren hinsichtlich der Ermittlung des Referenz-Reflexionsimpulses besteht darin, dass der Referenz-Reflexionsimpuls für verschiedene gemessene Abstandsinformationen ermittelt wird oder jedenfalls für verschiedene gemessene Abstandsinformationen abgelegt worden ist und zur Durchführung des Verfahrens derjenige Referenz-Reflexionsimpuls verwendet wird, der die beste Übereinstimmung mit der Abstandsinformation in der konkreten Messsituation hat. Diese Vorgehensweise ist insbesondere dann sinnvoll, wenn die Übertragungsstrecke einen relativ großen Einfluss auf die Signalform des durchlaufenden Radarsignals hat, beispielsweise bei Medien mit einer hohen Dispersion. In diesem Fall verändert sich das Empfangssignal tatsächlich merklich in Abhängigkeit von der Länge der durchlaufenden Strecke, also in Abhängigkeit von dem gemessenen Abstand, sodass eine entsprechende Anpassung in der Wahl des Referenz-Reflexionsimpulses zur Durchführung des Verfahrens sinnvoll ist.

Eine weitere bevorzugte Ausgestaltung des Verfahrens ist dadurch gekennzeichnet, dass wenigstens ein erster und ein zweiter Referenz-Reflexionsimpuls mit jeweils einer Referenz-Amplitude, einer Referenz-Empfangszeit und einem Referenz-Intensitätsverlauf ermittelt werden und dass der erste Referenz-Reflexionsimpuls im ersten Teil-Detektionsschritt verwendet wird und der zweite Referenz-Reflexionsimpuls im zweiten Teil-Detektionsschritt verwendet wird. Diese Verfahrensweise ist sinnvoll, wenn die beiden Reflexionssignale aufgrund ihrer Entstehungsgeschichte, also der Reflexion beispielsweise an unterschiedlichen Grenzschichten, unterschiedliche Amplitudenverläufe - also Signalformen - aufweisen. In diesem Fall führt die Subtraktion der entsprechenden Referenz-Reflexionsimpulse von dem Empfangssignal zu präziseren Differenz-Empfangssignalen.

Das zuvor beschriebene Verfahren ist nicht nur einsetzbar mit zwei Reflexionsimpulsen, sondern auch mit mehr als zwei Reflexionsimpulsen. Deshalb ist bei einer Weiterentwicklung des Verfahrens vorgesehen, dass zunächst eine Anzahl n der im Empfangssignal enthaltenen Reflexionsimpulse ermittelt wird, beispielsweise durch Spitzenerkennung oder andere analytische oder statistische Auswertung des Empfangssignals. Im initialen Detektionsschritt werden dann n-1 initiale Maxima im Amplitudenverlauf des Empfangssignals und deren initiale Empfangszeiten ermittelt. Die initialen Maxima werden als Werte für die ermittelten Amplituden und die initialen Empfangszeiten werden als Werte für die ermittelten Empfangszeiten gesetzt. Dann wird eine entsprechende Anzahl von n Teil-Detektionsschritten im Detektionsschritt ausgeführt, wobei im i-ten Teil-Detektionsschritt von dem Empfangssignal alle n-1 Referenz-Reflexionsimpulse außer dem i-ten Referenz-Reflexionsimpuls subtrahiert werden. wobei die Referenz-Reflexionsimpulse entsprechend parametriert sind mit den Näherungswerten für Amplitude und Empfangszeit. Aus dem so entstandenen Differenz-Empfangssignal werden mittels Spitzenerkennung die i-te ermittelte Empfangszeit und die i-te ermittelte Amplitude bestimmt. Das dem erweiterten Verfahren zugrunde liegende Prinzip ist das Gleiche wie bei dem anhand von zwei Reflexionsimpulsen geschilderten Verfahren: aus dem Empfangssignal werden die besten Schätzungen aller Reflexionsimpulse abgezogen, sodass nur noch die Wirkung eines einzigen Reflexionsimpulses erhalten bleibt. Durch Auswertung dieses einzigen Reflexionsimpulses werden dann bessere Näherungen für die Parameter dieses Reflexionsimpulses erhalten, also für Amplitude und Empfangszeit.

Die eingangs gestellte Aufgabe wird bei dem betrachteten Radarsensor zur Entfernungsmessung, mit einem Sendeelement zum Aussenden des Sendesignals und mit einem Empfangselement zum Empfangen des Empfangssignals und mit einer Signalverarbeitungseinheit dadurch gelöst, dass die Signalverarbeitungseinheit so ausgestaltet ist, dass sie im Betrieb des Radarsensors das zuvor beschriebene Verfahren ausführt.

Im Einzelnen gibt es nun eine Vielzahl von Möglichkeiten, das erfindungsgemäße Verfahren zum Betreiben eines Radarsensors und den entsprechenden Radarsensor auszugestalten und weiterzubilden. Dazu wird verwiesen, einerseits auf die dem unabhängigen Patentanspruch nachgeordneten Patentansprüche, andererseits auf die folgende Beschreibung von Ausführungsbeispielen in Verbindung mit der Zeichnung. In der Zeichnung zeigen
- Fig. 1: schematisch eine typische Einsatzsituation eines Radarsensors zu Entfernungsmessung,
- Fig. 2a, 2b: schematisch ein Empfangssignal mit einem zeitlich ausgedehnten Amplitudenverlauf mit ineinander laufenden Reflexionsimpulsen,
- Fig. 3: das Empfangssignal aus Fig. 2 mit einem ersten Reflexionsimpuls und einem zweiten Reflexionsimpuls,
- Fig. 4a, 4b: schematisch die Ermittlung eines Referenz-Reflexionsimpulses,
- Fig. 5a, 5b: schematisch einen ersten Teil-Detektionsschritt in erster Iterationsstufe,
- Fig. 6a, 6b: schematisch einen zweiten Teil-Detektionsschritt in erster Iterationsstufe,
- Fig. 7a, 7b: schematisch einen ersten Teil-Detektionsschritt in zweiter Iterationsstufe,
- Fig. 8a, 8b: schematisch einen zweiten Teil-Detektionsschritt in zweiter Iterationsstufe,
- Fig. 9a, 9b: schematisch einen ersten Teil-Detektionsschritt in dritter Iterationsstufe und
- Fig. 10: schematisch bei fortschreitenden Iterationen die Ergebnisse für die erste ermittelte Empfangszeit und die zweite ermittelte Empfangszeit sowie für die erste ermittelte Amplitude und die zweiter ermittelte Amplitude als Näherungswerte für die Parameter des ersten Empfangsimpulses und des zweiten Empfangsimpulses.

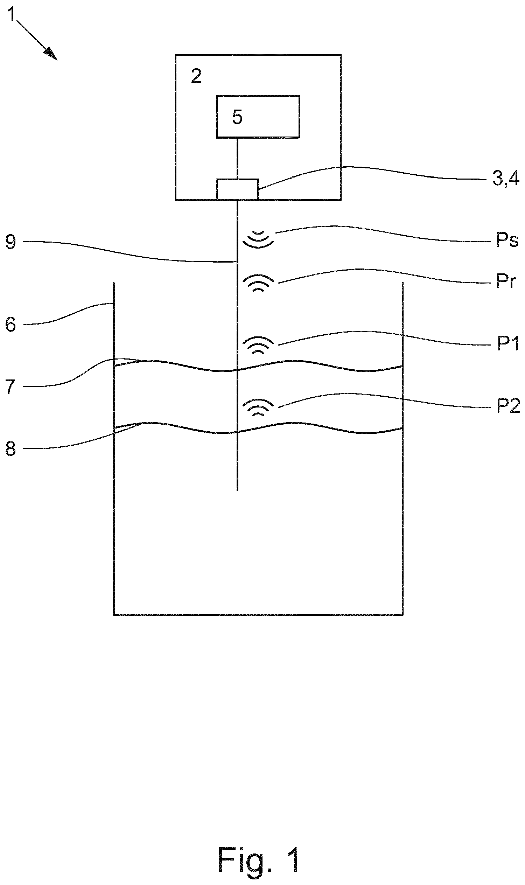

In den Fig. 1 bis 10 sind verschiedene Aspekte eines Verfahrens 1 zum Betreiben eines Radarsensors 2 zur Entfernungsmessung gezeigt und teilweise auch ein entsprechender Radarsensor 2.

Der in Fig. 1 dargestellte Radarsensor 2 ist ein kabelgebundener Radarsensor, bei dem ein Sendesignal Ps von einem Sendeelement 3 emittiert wird und bei dem sich das Sendesignal Ps entlang eines Messkabels 9 geführt ausbreitet. Diese Anordnung fällt unter den Begriff "Kabelradar", im Englischen time-domain reflectometry. Auf die spezielle Ausführung des Radarsensors 2 kommt es jedoch nicht an, es könnte genauso gut mit ungebundenen Freiraumwellen als Sendesignal Ps gearbeitet werden. In der dargestellten Anwendungssituation ragt das Messkabel 9 in einen Behälter 6 hinein, in dem sich zwei flüssige Medien befinden. Das zu dem Radarsensor 2 nächstgelegene Medium bildet mit der umgebenden Atmosphäre eine erste Grenzfläche 7, und die beiden flüssigen Medien bilden untereinander eine zweite Grenzfläche 8 aus. Ein konkretes Beispiel für eine derartige Messsituation wäre eine auf einem wässrigen Medium schwimmende Ölschicht.

An den Grenzflächen 7, 8 kommt es aufgrund der sich ändernden Wellen-übertragungseigenschaften zu Reflexionen in Form eines ersten Reflexionsimpulses P1 und eines zweiten Reflexionsimpulses P2. Da schon das Sendesignal Ps eine gewisse zeitliche Ausdehnung hat, haben natürlich auch die Reflexionsimpulse P1, P2 eine gewisse zeitliche Ausdehnung. Wenn diese Reflexionsimpulse P1, P2 zeitlich nah beieinanderliegen, dann gehen die Reflexionsimpulse P1, P2 ineinander über. Das von einem Empfangselement 4 empfangene Empfangssignal Pr hat dann einen zeitlich ausgedehnten Amplitudenverlauf, in dem ohne Weiteres die einzelnen Reflexionsimpulse P1, P2 nicht mehr - oder nur schlecht - unterscheidbar sind. Eine solche Unterscheidbarkeit des zeitlichen Auseinanderliegens des ersten Reflexionsimpulses P1 und des zweiten Reflexionsimpulses P2 ist aber erforderlich, um eine Abstandsinformation gewinnen zu können, im vorliegenden Fall, wie weit die beiden Grenzschichten 7, 8 voneinander entfernt sind.

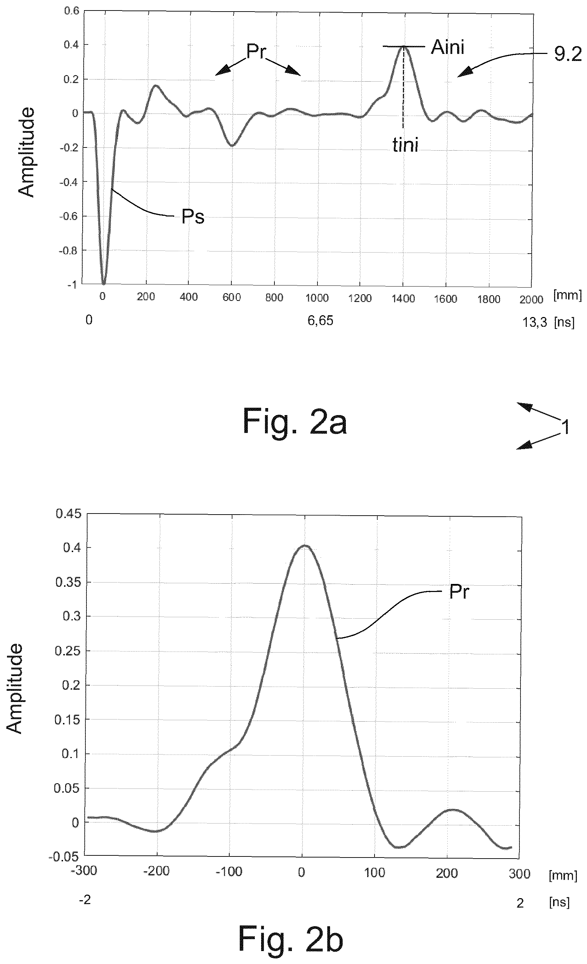

Fig. 2a zeigt die zeitliche Abfolge vom Aussenden des Sendesignals Ps zum Zeitpunkt null und den darauffolgenden Amplitudenverlauf des Empfangssignals Pr. In den Figuren 2a und 2b ist der Signalverlauf jeweils über eine Zeitachse und über eine Ortsachse aufgetragen, wobei Zeit und Ort in einem festen Verhältnis zueinander stehen, da die Laufzeit des Signals gleichbedeutend ist mit einem in dieser Zeit entsprechend zurückgelegten Weg. Wie schon in der allgemeinen Beschreibung ist auch in der Figurenbeschreibung nachfolgend immer von Empfangszeiten die Rede, unabhängig davon, ob die dargestellten Signale über der Zeit oder über einer entsprechende Ortkoordinate aufgetragen sind.
in Figur 2a ist zu erkennen, dass auf das Sendesignal Ps zunächst zwei zeitlich sehr nah gelegene aber gut unterscheidbare Reflexionsimpulse folgen, die von den Montageflanschen des Radarsensors 2 resultieren. Im rechten Teil des Signalverlaufs ist dann das Empfangssignal Pr mit einer relativ großen Amplitude zu erkennen, es handelt sich hier um das eigentlich interessierende Empfangssignal Pr. Dieser Teil des Empfangssignals Pr ist in Fig. 2b nochmals deutlicher herausgestellt.

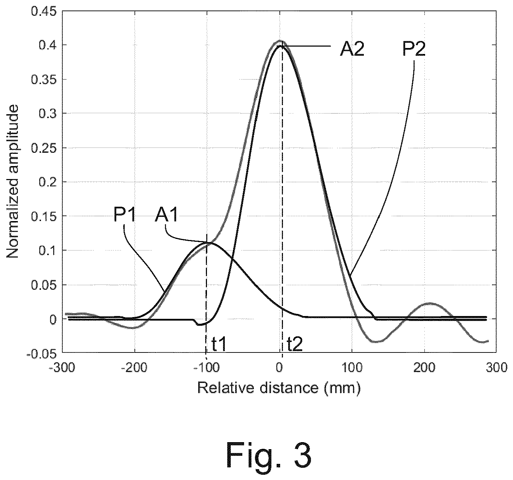

Fig. 3 zeigt den zeitlich ausgedehnten Amplitudenverlauf des Empfangssignals Pr, der einen ersten Reflexionsimpuls P1 mit einer ersten Empfangszeit t1 und einer ersten Amplitude A1 und einen zweiten Reflexionsimpuls P2 mit einer zweiten Empfangszeit t2 und einer zweiten Amplitude A2 empfängt. Den in den nachfolgenden Figuren dargestellten Verfahren ist gemeinsam, dass in einem Detektionsschritt 9 aus dem Empfangssignal Pr eine erste ermittelte Empfangszeit t1det und eine erste ermittelte Amplitude A1det als Näherungswerte für die erste Empfangszeit t1 und die erste Amplitude A1 des ersten Reflexionsimpulses P1 und eine zweite ermittelte Empfangszeit t2det und eine zweite ermittelte Amplitude A2det als Näherungswerte für die zweite Empfangszeit t2 und die zweite Amplitude A2 des zweiten Reflexionsimpulses P2 ermittelt werden. Dies ist die Voraussetzung dafür, damit für die Reflexionsimpulse P1, P2 aus den ermittelten Empfangszeiten tldet, t2det Abstandsinformationen berechnet werden können. Die Kunst besteht darin, aus dem zusammenhängenden Empfangssignal Pr mit signalmäßig ineinanderlaufenden Reflexionsimpulsen P1 und P2 diese Reflexionsimpulse P1, P2 zu extrahieren und möglichst gute Näherungen für die erste Empfangszeit t1 und die zweite Empfangszeit t2 in Form der ersten ermittelten Empfangszeit t1det und der zweiten ermittelten Empfangszeit t2det zu ermitteln.

Im Detektionsschritt 9 werden mehrere Verfahrensschritte 9.1, 9.2, 9.3 und 9.4 durchgeführt.

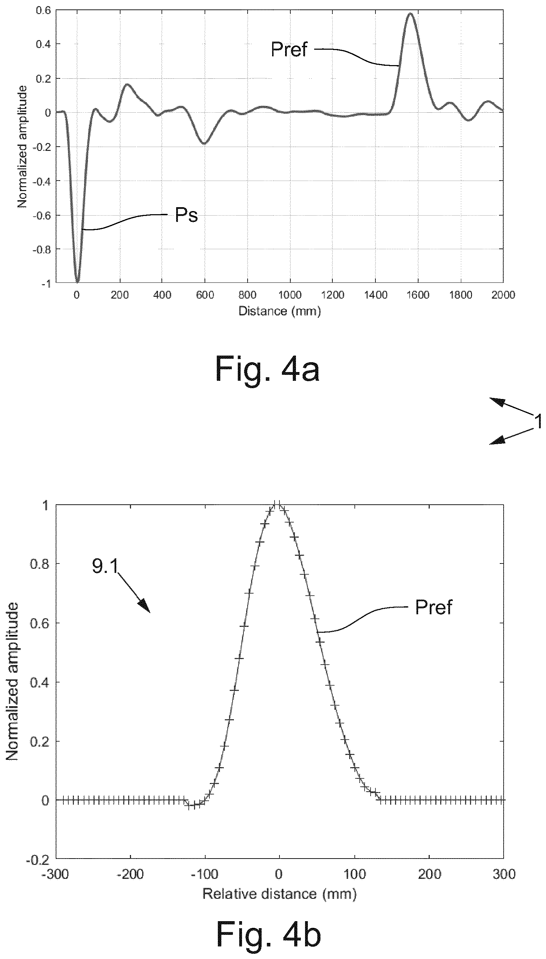

Fig 4a und 4b zeigen, dass zunächst ein Referenz-Reflexionsimpuls Pref ermittelt 9.1 wird. dazu wird ein einziges Sendesignal Ps in Form eines Sendeimpulses auf die Messstrecke gegeben, wobei darauf geachtet wird, dass nur ein einziges Reflexionssignal als Empfangssignal Pr zurückkehrt. Dieses Empfangssignal Pr ist charakteristisch für das Übertragungsverhalten der Messstrecke. Die Idee des vorliegenden Verfahrens 1 liegt in der Annahme, dass sich jedes Empfangssignal Pr durch eine Überlagerung mehrerer zeitlich zueinander versetzter und sich möglicherweise in der Amplitude unterscheidender Referenz-Reflexionsimpulse darstellen lässt. Fig. 4b zeigt das auf die Amplitude 1 und die Empfangszeit null normalisierte Referenz-Reflexionsimpuls Pref, der einen Referenz-Intensitätsverlauf aufweist (Amplitudenverlauf). Mit Hilfe des Referenz-Reflexionsimpulses können demnach beliebige Empfangssignale Pr nachgebildet werden, indem eine Referenz-Amplitude Aref und eine Referenz-Empfangszeit tref bestimmt werden (P(t) = Aref*Pref(t-tref) = Pref (Aref, tref)).

Die Aufgabe besteht nun darin, aus dem Empfangssignal Pr, wie es in den Figuren 2a und 2b dargestellt ist, gute Schätzung für den ersten Reflexionsimpuls P1 und den zweiten Reflexionsimpuls P2 zu ermitteln.

Dazu werden in einem initialen Detektionsschritt 9.2 (Fig. 2) ein initiales Maximum Aini im Amplitudenverlauf des Empfangssignals Pr und dessen initiale Empfangszeit tini ermittelt. Ferner werden das initiale Maximum Aini als Wert für die erste ermittelte Amplitude A1det und die initiale Empfangszeit tini als Wert für die erste ermittelte Empfangszeit t1det gesetzt. In Figur 2b ist das Maximum des Empfangssignals Pr auf den Zeitwert bzw. den Ortswert null gesetzt worden, diese Darstellung ist bei den nachfolgenden Figuren zum größten Teil beibehalten worden.

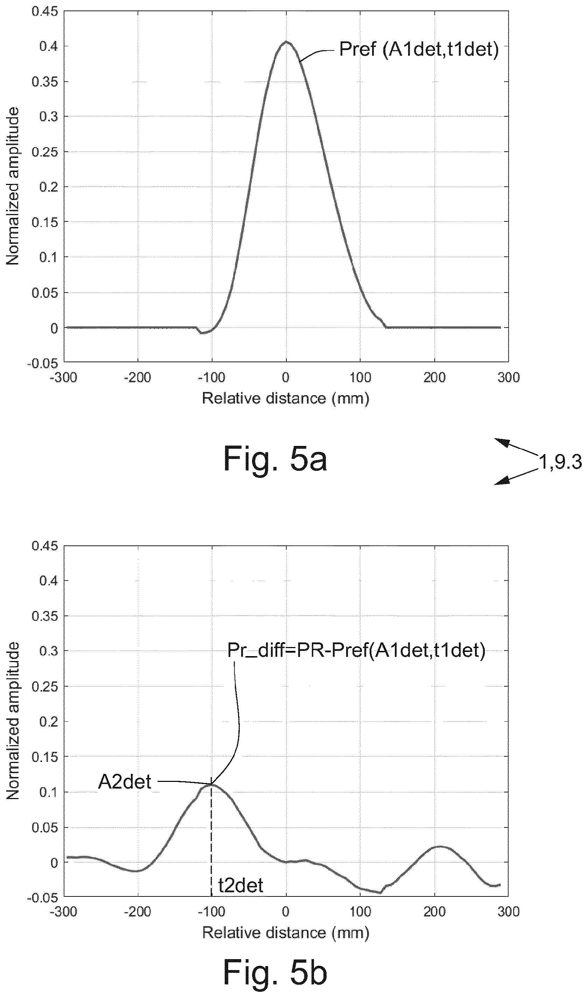

Fig. 5a, 5b zeigt einen ersten Teil-Detektionsschritt 9.3. Ein Differenz-Empfangssignal Pr_diff (Fig. 5b) wird erzeugt, indem von dem Empfangssignal Pr der Referenz-Reflexionsimpuls Pref (Fig. 5a) mit der ersten ermittelten Amplitude A1det als Referenz-Amplitude Aref und mit der ersten ermittelten Empfangszeit t1det als Referenz-Empfangszeit tref subtrahiert wird, es wird also die Operation Pr_diff = Pr - Pref(A1det, tldet) ausgeführt; das Ergebnis ist in Fig. 5b dargestellt. Aus dem Differenz-Empfangssignal Pr_diff werden mittels Spitzenerkennung die zweite ermittelte Empfangszeit t2det und die zweite ermittelte Amplitude A2det ermittelt. Wie bereits weiter oben ausgeführt, liegt die ermittelte Empfangszeit immer dort vor, wo die ermittelte Amplitude, also das ermittelte Amplitudenmaximum vorliegt.

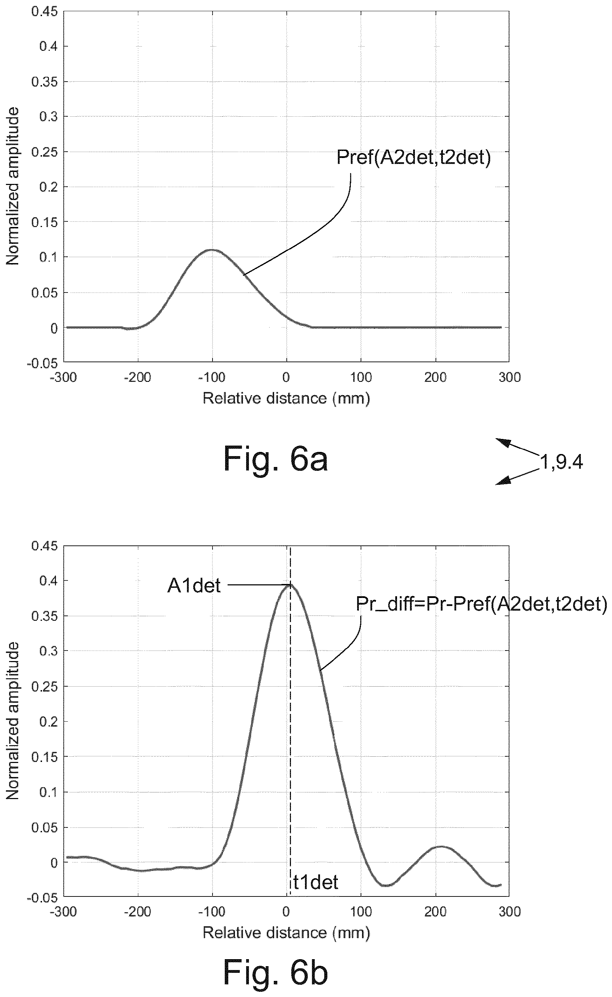

In einem zweiten Teil-Detektionsschritt 9.4, den die Fig. 6a, 6b zeigen, wird das Differenz-Empfangssignal Pr_diff erzeugt (Fig. 6b), indem von dem Empfangssignal Pr der Referenz-Reflexionsimpuls Pref (Fig. 6a) mit der zweiten ermittelten Amplitude A2det als Referenz-Amplitude Aref und mit der zweiten ermittelten Empfangszeit t2det als Referenz-Empfangszeit tref subtrahiert wird (Pr_diff = Pr - Pref(A2det, t2det)). Aus dem Differenz-Empfangssignal P_diff werden dann mittels Spitzenerkennung neue Werte für die erste ermittelte Empfangszeit t1det und die erste ermittelte Amplitude A1det bestimmt.

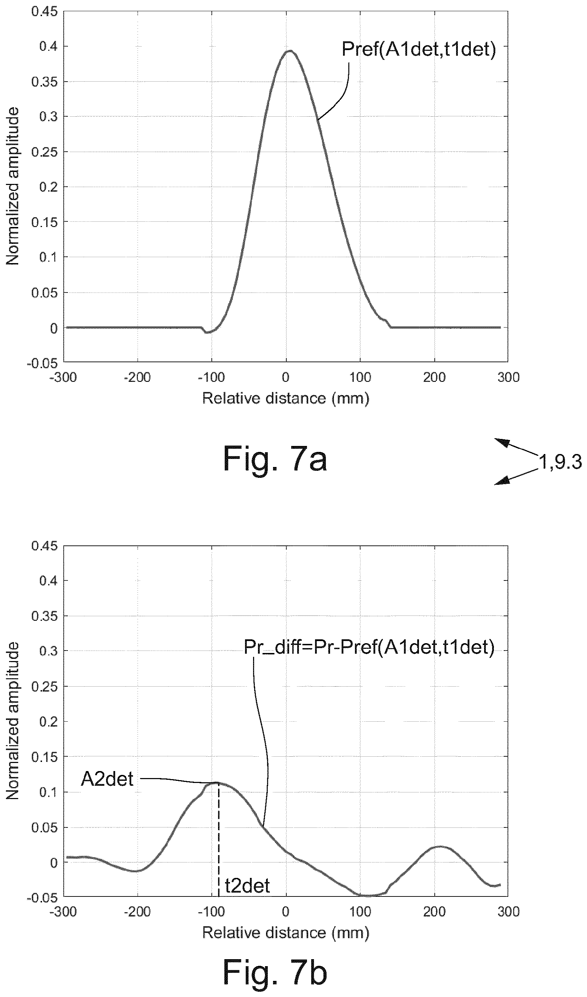

Wie anhand der Fig. 7 bis 9 zu erkennen ist, wird das Verfahren 1 in mehreren Iterationen durchgeführt. Der erste Teil-Detektionsschritt 9.3 und der zweite Teil-Detektionsschritt 9.4 werden abwechselnd in mehreren Iterationen hintereinander ausgeführt.

Fig. 7a, 7b zeigen den ersten Teil-Detektionsschritt 9.3 in zweiter Iteration. Das Differenz-Empfangssignal Pr_diff (Fig. 7b) wird erzeugt, indem von dem Empfangssignal Pr der Referenz-Reflexionsimpuls Pref (Fig. 7a) mit der ersten ermittelten Amplitude A1det als Referenz-Amplitude Aref und mit der ersten ermittelten Empfangszeit t1det der letzten Iterationsstufe als Referenz-Empfangszeit tref subtrahiert wird, es wird also die Operation Pr_diff = Pr - Pref(A1det, tldet) ausgeführt; das Ergebnis ist in Fig. 7b dargestellt. Aus dem Differenz-Empfangssignal Pr_diff werden mittels Spitzenerkennung die zweite ermittelte Empfangszeit t2det und die zweite ermittelte Amplitude A2det ermittelt.

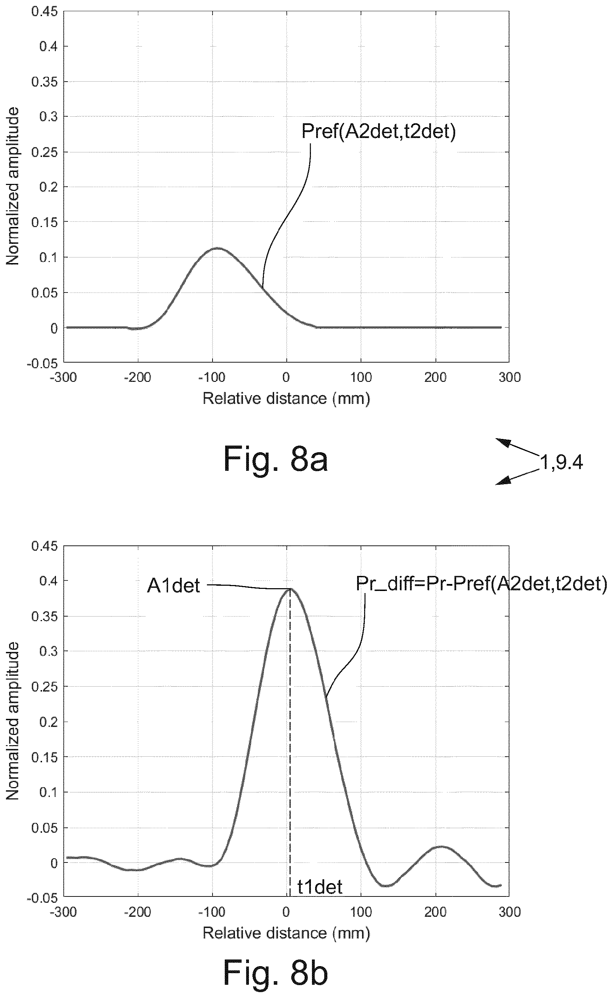

In dem weiteren, zweiten Teil-Detektionsschritt 9.4, jetzt in zweiter Iteration, den die Fig. 8a, 8b zeigen, wird das Differenz-Empfangssignal Pr_diff erzeugt (Fig. 8b), indem von dem Empfangssignal Pr der Referenz-Reflexionsimpuls Pref (Fig. 8a) mit der zweiten ermittelten Amplitude A2det als Referenz-Amplitude Aref und mit der zweiten ermittelten Empfangszeit t2det als Referenz-Empfangszeit tref der letzten Iterationsstufe subtrahiert wird (Pr_diff = Pr - Pref(A2det, t2det)). Aus dem Differenz-Empfangssignal P_diff werden dann erneut mittels Spitzenerkennung neue Werte für die erste ermittelte Empfangszeit t1det und die erste ermittelte Amplitude A1det bestimmt.

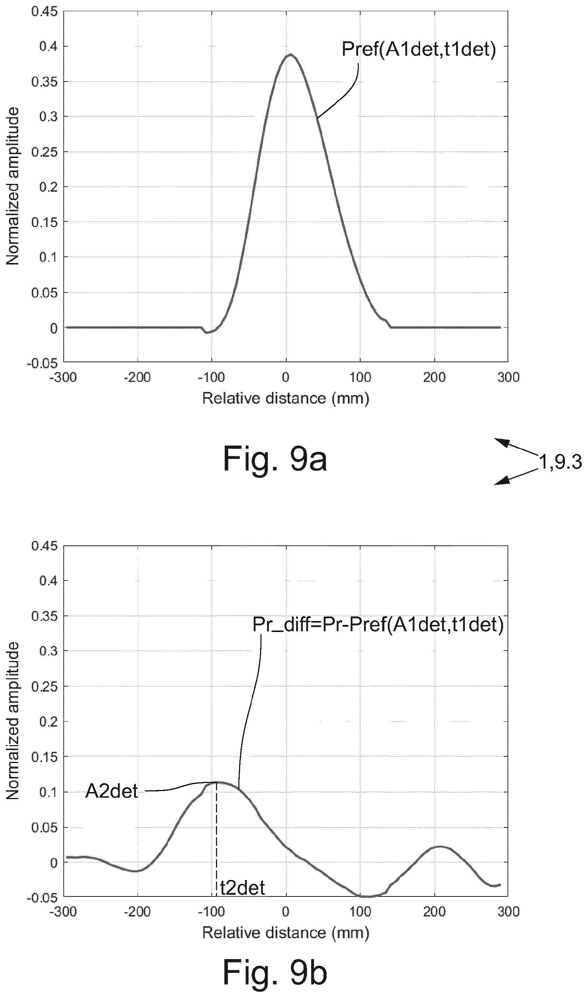

Fig. 9a, 9b zeigen den ersten Teil-Detektionsschritt 9.3 in dritter Iteration. Die Vorgehensweise ist vergleichbar mit der in den vorhergehenden Iterationen.

Bei dem dargestellten Ausführungsbeispiel sind die Iterationen abgebrochen werden, weil die Veränderung der ersten ermittelten Empfangszeit t1det und die Veränderung der zweiten ermittelten Empfangszeit t2det von einem Iterationsschritt zum nächsten Iterationsschritt unter eine vorgegebene Grenze gefallen sind.

Wie anhand von Fig. 2a erkennbar ist, ist das Verfahren 1 so ausgeführt worden, dass im initialen Detektionsschritt 9.2 das absolute Maximum im Amplitudenverlauf des Empfangssignals Pr als initiales Maximum Aini verwendet worden ist.

Ferner ist bei dem dargestellten Verfahren 1 realisiert worden, siehe Fig. 2, dass der Referenz-Reflexionsimpuls Pref von dem Radarsensor 2 in der eingerichteten Einsatzumgebung aufgenommen worden ist.

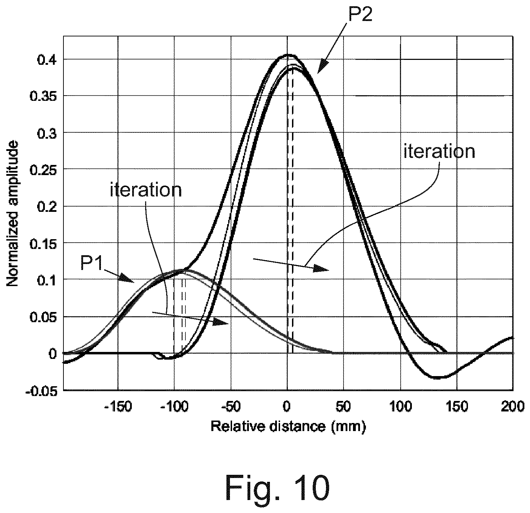

Fig. 10 illustriert die bei fortschreitenden Iterationen ständig verbesserten Ergebnisse für die erste ermittelte Empfangszeit tldet, die zweite ermittelte Empfangszeit t2det sowie für die erste ermittelte Amplitude A1det und die zweite ermittelte Amplitude A2det als Näherungswerte für die Parameter des ersten Empfangsimpulses P1 und des zweiten Empfangsimpulses P2.

### Bezugszeichen

- 1: Verfahren
- 2: Radarsensor
- 3: Sendeelement
- 4: Empfangselement
- 5: Signalverarbeitungseinheit
- 6: Behältnis
- 7: erste Grenzfläche
- 8: zweite Grenzfläche
- 9: Detektionsschritt
- 9.1: Ermitteln eines Referenz-Reflexionsimpulses
- 9.2: Erstbestimmung der ersten ermittelten Amplitude und der ersten ermittelten Empfangszeit
- 9.3: erster Teil-Detektionsschritt
- 9.4: zweiter Teil-Detektionsschritt

- 9Ps: Sendesignal
- Pr: Empfangssignal
- P1, P2: erster, zweiter Reflexionsimpuls
- A1, A2: erste, zweite Amplitude
- t1, t2: erste, zweite Empfangszeit
- tldet, t2det: erste, zweite ermittelte Empfangszeit
- Aldet, A2: deterste, zweite ermittelte Amplitude
- Aini: initiales Maximum im Amplitudenverlauf des Empfangssignals
- tini: initiale Empfangszeit des initialen Maximums
- Pref: Referenz-Reflexionsimpuls
- Aref: Referenz-Amplitude
- tref: Referenz-Empfangszeit
- Pr_diff: Differenz-Empfangssignal

## Patentansprüche

1. Verfahren 1 zum Betreiben eines Radarsensors 2 zur Entfernungsmessung, wobei der Radarsensor 2 ein Sendesignal Ps aussendet, ein Empfangssignal (Pr) mit einem zeitlich ausgedehnten Amplitudenverlauf umfassend wenigstens einen ersten Reflexionsimpuls (P1) mit einer ersten Empfangszeit (t1) und einer ersten Amplitude (A1) und einen zweiten Reflexionsimpuls (P2) mit einer zweiten Empfangszeit (t2) und einer zweiten Amplitude (A2) empfängt, wobei in einem Detektionsschritt (9) aus dem Empfangssignal (Pr) eine erste ermittelte Empfangszeit (t1det) und eine erste ermittelte Amplitude (Aldet) als Näherungswerte für die erste Empfangszeit (t1) und die erste Amplitude (A1) des ersten Reflexionsimpulses (P1) und eine zweite ermittelte Empfangszeit (t2det) und eine zweite ermittelte Amplitude (A2det) als Näherungswerte für die zweite Empfangszeit (t2) und die zweite Amplitude (A2) des zweiten Reflexionsimpulses (P2) ermittelt werden, und wobei aus den ermittelten Empfangszeiten (tldet, t2det) Abstandsinformationen berechnet werden, wobei im Detektionsschritt (9)
- wenigstens ein Referenz-Reflexionsimpuls (Pref) mit einer Referenz-Amplitude (Aref), einer Referenz-Empfangszeit (tref) und einem Referenz-Intensitätsverlauf ermittelt (9.1) wird,
- in einem initialen Detektionsschritt (9.2) ein initiales Maximum (Aini) als Wert für die erste ermittelte Amplitude (A1det) und eine initiale Empfangszeit (tini) als Wert für die erste ermittelte Empfangszeit (t1det) gesetzt wird,
- in einem ersten Teil-Detektionsschritt (9.3) ein Differenz-Empfangssignal (Pr diff) erzeugt wird, indem von dem Empfangssignal (Pr) der Referenz-Reflexionsimpuls (Pref) mit der ersten ermittelten Amplitude (Aldet) als Referenz-Amplitude (Aref) und mit der ersten ermittelten Empfangszeit (t1det) als Referenz-Empfangszeit (tref) subtrahiert wird, und aus dem Differenz-Empfangssignal (Pr diff) mittels Spitzenerkennung die zweite ermittelte Empfangszeit (t2det) und die zweite ermittelte Amplitude (A2det) bestimmt werden, und
- in einem zweiten Teil-Detektionsschritt (9.4) das Differenz-Empfangssignal (Pr_diff) erzeugt wird, indem von dem Empfangssignal (Pr) der Referenz-Reflexionsimpuls (Pref) mit der zweiten ermittelten Amplitude (A2det) als Referenz-Amplitude (Aref) und mit der zweiten ermittelten Empfangszeit (t2det) als Referenz-Empfangszeit (tref) subtrahiert wird, und aus dem Differenz-Empfangssignal (P_diff) mittels Spitzenerkennung die erste ermittelte Empfangszeit (t1det) und die erste ermittelte Amplitude (Aldet) bestimmt werden.

2. Verfahren (1) nach Anspruch 1, **dadurch gekennzeichnet, dass** der erste Teil-Detektionsschritt (9.3) und der zweite Teil-Detektionsschritt (9.4) in mehreren Iterationen hintereinander ausgeführt werden.

3. Verfahren (1) nach Anspruch 2, **dadurch gekennzeichnet, dass** die Iterationen abgebrochen werden, wenn die Veränderung der ersten ermittelten Empfangszeit (t1det) oder/und die Veränderung der zweiten ermittelten Empfangszeit (t2det) von einem Iterationsschritt zum nächsten Iterationsschritt unter eine vorgegebene Grenze fällt/fallen.

4. Verfahren (1) nach Anspruch 2, **dadurch gekennzeichnet, dass** die Iterationen abgebrochen werden, wenn ein mit dem Differenz-Empfangssignal (Pr_diff) verbundenes Maß einen Grenzwert unterschreitet, insbesondere wobei das mit dem Differenz-Empfangssignal (Pr_diff) verbundene Maß und der diesbezügliche Grenzwert ein Leistungsmaß des Differenz-Empfangssignals (Pr_diff) ist.

5. Verfahren (1) nach Anspruch 2, **dadurch gekennzeichnet, dass** die Iterationen abgebrochen werden, wenn ein mit einem vollständigen Differenz-Empfangssignal verbundenes Maß einen Grenzwert unterschreitet, wobei das vollständige Differenz-Empfangssignal erhalten wird, indem von dem Empfangssignal (Pr) sowohl der Referenz-Reflexionsimpuls (Pref) mit der ersten ermittelten Amplitude (Aldet) als Referenz-Amplitude (Aref) und mit der ersten ermittelten Empfangszeit (t1det) als Referenz-Empfangszeit (tref) subtrahiert wird als auch der Referenz-Reflexionsimpuls (Pref) mit der zweiten ermittelten Amplitude (A2det) als Referenz-Amplitude (Aref) und mit der zweiten ermittelten Empfangszeit (t2det) als Referenz-Empfangszeit (tref) subtrahiert wird, insbesondere wobei das mit dem vollständigen Differenz-Empfangssignal verbundene Maß und der diesbezügliche Grenzwert ein Leistungsmaß des vollständigen Differenz-Empfangssignals ist.

6. Verfahren (1) nach einem der Ansprüche 1 bis 5, **dadurch gekennzeichnet, dass** im initialen Detektionsschritt (9.2) das initiale Maximum (Aini) im Amplitudenverlauf des Empfangssignals (Pr) und dessen initiale Empfangszeit (tini) ermittelt werden und das initiale Maximum (Aini) als Wert für die erste ermittelte Amplitude (A1det) und die initiale Empfangszeit (tini) als Wert für die erste ermittelte Empfangszeit (t1det) gesetzt wird, insbesondere wobei das absolute Maximum im Amplitudenverlauf des Empfangssignals (Pr) als initiales Maximum (Aini) verwendet wird.

7. Verfahren (1) nach einem der Ansprüche 1 bis 6, **dadurch gekennzeichnet, dass** der Referenz-Reflexionsimpuls (Pref) im Radarsensor (2) abgespeichert worden ist und nur ausgelesen wird, insbesondere wobei mehrere Referenz-Reflexionsimpulse (Pref) in dem Radarsensor (2) abgespeichert worden sind, insbesondere für verschiedene Medien in der Laufstrecke des Sendesignals (Ps).

8. Verfahren (1) nach einem der Ansprüche 1 bis 6, **dadurch gekennzeichnet, dass** der Referenz-Reflexionsimpuls (Pref) von dem Radarsensor (2) in der eingerichteten Einsatzumgebung aufgenommen wird.

9. Verfahren (1) nach Anspruch 7 oder 8, **dadurch gekennzeichnet, dass** der Referenz-Reflexionsimpuls (Pref) für verschiedene gemessene Abstandsinformationen ermittelt wird und zur Durchführung des Verfahrens (1) derjenige Referenz-Reflexionsimpuls (Pref) verwendet wird, der die beste Übereinstimmung mit der Abstandsinformation in der konkreten Messsituation hat.

10. Verfahren (1) nach einem der Ansprüche 1 bis 9, **dadurch gekennzeichnet, dass** wenigstens ein erster und ein zweiter Referenz-Reflexionsimpuls (Pref) mit jeweils einer Referenz-Amplitude (Aref), einer Referenz-Empfangszeit (tref) und einem Referenz-Intensitätsverlauf ermittelt werden und dass der erste Referenz-Reflexionsimpuls im ersten Teil-Detektionsschritt (9.3) verwendet wird und der zweite Referenz-Reflexionsimpuls im zweiten Teil-Detektionsschritt (9.4) verwendet wird.

11. Verfahren (1) nach einem der Patentansprüche 1 bis 10, **dadurch gekennzeichnet, dass** eine Anzahl n der im Empfangssignal (Pr) enthaltenen Reflexionsimpulse (P) ermittelt wird, dass im initialen Detektionsschritt n-1 initiale Maxima im Amplitudenverlauf des Empfangssignals (Pr) und deren initiale Empfangszeiten ermittelt werden, und die initialen Maxima als Werte für die ermittelten Amplituden und die initialen Empfangszeiten als Werte für die ermittelten Empfangszeiten gesetzt werden, dass eine entsprechende Anzahl von n Teil-Detektionsschritten im Detektionsschritt (9) ausgeführt wird, wobei im i-ten Teil-Detektionsschritt von dem Empfangssignal (Pr) alle n-1 Referenz-Reflexionsimpulse (P) außer dem i-ten Referenz-Reflexionsimpuls (Pi) subtrahiert werden und aus dem Differenz-Empfangssignal (Pr_diff) mittels Spitzenerkennung die i-te ermittelte Empfangszeit (tidet) und die i-te ermittelte Amplitude (Aidet) bestimmt werden.

12. Radarsensor (2) zur Entfernungsmessung, mit einem Sendeelement (3) zum Aussenden eines Sendesignals (Ps), mit einem Empfangselement (4) zum Empfangen eines Empfangssignals (Pr) und mit einer Signalverarbeitungseinheit (5), wobei die Signalverarbeitungseinheit (5) so ausgestaltet ist, dass sie im Betrieb des Radarsensors (2) das Verfahren (1) nach einem der Ansprüche 1 bis 11 ausführt.

## Claims

1. Method (1) for operating a radar sensor (2) for distance measurement, wherein the radar sensor (2) emits a transmitted signal (Ps), receives a receive signal (Pr) with a temporally extended amplitude profile comprising at least a first reflection pulse (P1) with a first receive time (t1) and a first amplitude (A1) and a second reflection pulse (P2) with a second receive time (t2) and a second amplitude (A2) wherein in a detection step (9) a first determined receive time (t1det) and a first determined amplitude (Aldet) are determined from the receive signal (Pr) as approximate values for the first receive time (t1) and the first amplitude (A1) of the first reflection pulse (P1), and a second determined receive time (t2det) and a second determined amplitude (A2det) are determined as approximate values for the second receive time (t2) and the second amplitude (A2) of the second reflection pulse (P2), and wherein distance information is determined from the determined receive times (tldet, t2det),
wherein, in the detection step (9)
- at least one reference reflection pulse (Pref) with a reference amplitude (Aref), a reference receive time (tref) and a reference intensity curve is determined (9.1),
- in an initial detection step (9.2), an initial maximum (Aini) is set as a value for the first determined amplitude (Aldet) and an initial receive time (tini) is set as a value for the first determined receive time (t1det)
- in a first partial detection step (9. 3), a difference receive signal (Pr _diff) is generated in that the reference reflection pulse (Pref) with the first determined amplitude (Aldet) as the reference amplitude (Aref) and with the first determined receive time (t1det) as the reference receive time (tref) is subtracted from the receive signal (Pr) and the second determined receive time (t2det) and the second determined amplitude (A2det) are determined from the difference receive signal (Pr _diff) by means of peak detection, and
- in a second partial detection step (9. 4) the difference receive signal (Pr_diff) is generated in that the reference reflection pulse (Pref) with the second determined amplitude (A2det) as the reference amplitude (Aref) and with the second determined receive time (t2det) as the reference receive time (tref) is subtracted from the receive signal (Pr) and the first determined receive time (t1det) and the first determined amplitude (Aldet) are determined from the difference receive signal (P_diff) by means of peak detection.

2. Method (1) according to claim 1, **characterized in that** the first partial detection step (9.3) and the second partial detection step (9.4) are carried out in several iterations in succession.

3. Method (1) according to claim 2, **characterized in that** the iterations are aborted if the change in the first determined receive time (t1det) or/and the change in the second determined receive time (t2det) from one iteration step to the next iteration step falls below a predetermined limit.

4. Method (1) according to claim 2, **characterized in that** the iterations are terminated when a measure associated with the difference receive signal (Pr_diff) falls below a limit value, in particular wherein the measure associated with the difference receive signal (Pr_diff) and the limit value relating thereto is a performance measure of the difference receive signal (Pr_diff).

5. Method (1) according to claim 2, **characterized in that** the iterations are aborted when a measure associated with a complete difference receive signal falls below a limit value, wherein the complete difference receive signal is obtained **in that** the reference reflection pulse (Pref) with the first determined amplitude (Aldet) as the reference amplitude (Aref) and with the first determined receive time (t1det) as the reference time (tref) is subtracted from the receive signal (Pr) and that the reference reflection pulse (Pref) with the second determined amplitude (A2det) as reference amplitude (Aref) and with the second determined receive time (t2det) as reference receive time (tref) is subtracted from the receive signal (Pr), in particular wherein the measure associated with the complete difference receive signal and the limit value with respect thereto is a power measure of the complete difference receive signal.

6. Method (1) according to any one of claims 1 to 5, **characterized in that** in the initial detection step (9.2), the initial maximum (Aini) in the amplitude curve of the receive signal (Pr) and its initial receive time (tini) are determined and the initial maximum (Aini) is set as the value for the first determined amplitude (Aldet) and the initial receive time (tini) is set as the value for the first determined receive time (tldet), in particular wherein the absolute maximum in the amplitude response of the receive signal (Pr) is used as the initial maximum (Aini).

7. Method (1) according to any one of claims 1 to 6, **characterized in that** the reference reflection pulse (Pref) has been stored in the radar sensor (2) and is only read out, in particular wherein a plurality of reference reflection pulses (Pref) have been stored in the radar sensor (2), in particular for different media in the path of the transmitted signal (Ps).

8. Method (1) according to any one of claims 1 to 6, **characterized in that** the reference reflection pulse (Pref) is received by the radar sensor (2) in the configured deployment environment.

9. Method (1) according to any one of claims 7 or 8, **characterized in that** the reference reflection pulse (Pref) is determined for different measured distance information and the reference reflection pulse (Pref) having the best correlation with the distance information in the specific measurement situation is used to carry out the method (1).

10. Method (1) according to any one of claims 1 to 9, **characterized in that** at least a first and a second reference reflection pulse (Pref) each having a reference amplitude (Aref), a reference receive time (tref) and a reference intensity curve are determined, and that the first reference reflection pulse is used in the first partial detection step (9.3) and the second reference reflection pulse is used in the second partial detection step (9.4).

11. Method (1) according to any one of claims 1 to 10, **characterized in that** a number n of the reflection pulses (P) contained in the receive signal (Pr) is determined, that, in the initial detection step, n-1 initial maxima in the amplitude profile of the receive signal (Pr) and their initial receive times are determined, and the initial maxima are set as values for the determined amplitudes and the initial receive times are set as values for the determined receive times, that a corresponding number of n partial detection steps is carried out in the detection step (9), wherein, in the i-th partial detection step, all n-1 reference reflection pulses (P) except for the i-th reference reflection pulse (Pi) are subtracted from the receive signal (Pr) and the i-th determined receive time (tidet) and the i-th determined amplitude (Aidet) are determined from the difference receive signal (Pr _diff) by means of peak detection.

12. Radar sensor (2) for distance measurement, having a transmitting element (3) for transmitting a transmit signal (Ps), having a receiving element (4) for receiving a receive signal (Pr), and having a signal processing unit (5), wherein the signal processing unit (5) is configured in such a way that it carries out the method (1) according to any one of claims 1 to 11 during operation of the radar sensor (2).

## Revendications

1. Procédé 1 de fonctionnement d'un capteur radar 2 destiné à la télémétrie, le capteur radar 2 émettant un signal d'émission Ps, recevant un signal de réception (Pr) présentant une courbe d'amplitude étendue dans le temps comprenant au moins une première impulsion de réflexion (P1) ayant un premier temps de réception (t1) et une première amplitude (A1), et une seconde impulsion de réflexion (P2) ayant un second temps de réception (t2) et une seconde amplitude (A2), dans lequel, lors d'une étape de détection (9), un premier temps de réception déterminé (t1det) et une première amplitude déterminée (Aldet) en tant que valeurs approchées pour le premier temps de réception (t1) et la première amplitude (A1) de la première impulsion de réflexion (P1) et un second temps de réception déterminé (t2det) et une seconde amplitude déterminée (A2det) en tant que valeurs approchées pour le second temps de réception (t2) et la seconde amplitude (A2) de la seconde impulsion de réflexion (P2) sont déterminés à partir du signal de réception (Pr), et dans lequel des informations de distance sont calculées à partir des temps de réception déterminés (t1det, t2det),
dans lequel
lors de l'étape de détection (9)
- au moins une impulsion de réflexion de référence (Pref) ayant une amplitude de référence (Aref), un temps de réception de référence (tref) et une courbe d'intensité de référence est déterminée (9.1),
- lors d'une étape de détection initiale (9.2), un maximum initial (Aini) est défini comme valeur pour la première amplitude déterminée (Aldet) et un temps de réception initial (tini) est défini comme valeur pour le premier temps de réception déterminé (t1det),
- lors d'une première étape de détection partielle (9.3), un signal de réception de différence (Pr diff) est généré en soustrayant du signal de réception (Pr) l'impulsion de réflexion de référence (Pref) ayant la première amplitude déterminée (Aldet) comme amplitude de référence (Aref) et ayant le premier temps de réception déterminé (t1det) comme temps de réception de référence (tref), et le second temps de réception déterminé (t2det) et la seconde amplitude déterminée (A2det) sont déterminés à partir du signal de réception de différence (Pr diff) au moyen d'une détection de crête, et
- lors d'une seconde étape de détection partielle (9.4), le signal de réception de différence (Pr_diff) est généré en soustrayant du signal de réception (Pr) l'impulsion de réflexion de référence (Pref) ayant la seconde amplitude déterminée (A2det) comme amplitude de référence (Aref) et ayant le second temps de réception déterminé (t2det) comme temps de réception de référence (tref), et le premier temps de réception déterminé (t1det) et la première amplitude déterminée (Aldet) sont déterminés à partir du signal de réception de différence (P_diff) au moyen d'une détection de crête.

2. Procédé (1) selon la revendication 1, **caractérisé en ce que** la première étape de détection partielle (9.3) et la seconde étape de détection partielle (9.4) sont exécutées en plusieurs itérations successives.

3. Procédé (1) selon la revendication 2, **caractérisé en ce que** les itérations sont interrompues lorsque la variation du premier temps de réception déterminé (t1det) et/ou la variation du second temps de réception déterminé (t2det) d'une étape d'itération à l'étape d'itération suivante s'abaisse/s'abaissent en dessous d'une limite prédéfinie.

4. Procédé (1) selon la revendication 2, **caractérisé en ce que** les itérations sont interrompues lorsqu'une mesure associée au signal de réception de différence (Pr_diff) s'abaisse en dessous d'une valeur limite, en particulier dans lequel la mesure associée au signal de réception de différence (Pr diff) et la valeur limite correspondante sont une mesure de puissance du signal de réception de différence (Pr _diff).

5. Procédé (1) selon la revendication 2, **caractérisé en ce que** les itérations sont interrompues lorsqu'une mesure associée à un signal de réception de différence complet s'abaisse en dessous d'une valeur limite, dans lequel le signal de réception de différence complet est obtenu en soustrayant du signal de réception (Pr) à la fois l'impulsion de réflexion de référence (Pref) ayant la première amplitude déterminée (Aldet) comme amplitude de référence (Aref) et ayant le premier temps de réception déterminé (t1det) comme temps de réception de référence (tref), et l'impulsion de réflexion de référence (Pref) ayant la seconde amplitude déterminée (A2det) comme amplitude de référence (Aref) et ayant le second temps de réception déterminé (t2det) comme temps de réception de référence (tref), en particulier dans lequel la mesure associée au signal de réception de différence complet et la valeur limite correspondante sont une mesure de puissance du signal de réception de différence complet.

6. Procédé (1) selon l'une quelconque des revendications 1 à 5, **caractérisé en ce que**, lors de l'étape de détection initiale (9.2), le maximum initial (Aini) de la courbe d'amplitude du signal de réception (Pr) et son temps de réception initial (tini) sont déterminés, et le maximum initial (Aini) est défini comme valeur de la première amplitude déterminée (Aldet) et le temps de réception initial (tini) est défini comme valeur du premier temps de réception déterminé (tldet), en particulier dans lequel le maximum absolu de la courbe d'amplitude du signal de réception (Pr) est utilisé comme maximum initial (Aini).

7. Procédé (1) selon l'une quelconque des revendications 1 à 6, **caractérisé en ce que** l'impulsion de réflexion de référence (Pref) a été mémorisée dans le capteur radar (2) et est uniquement lue, en particulier dans lequel plusieurs impulsions de réflexion de référence (Pref) ont été mémorisées dans le capteur radar (2), en particulier pour différents milieux sur le trajet du signal d'émission (Ps).

8. Procédé (1) selon l'une quelconque des revendications 1 à 6, **caractérisé en ce que** l'impulsion de réflexion de référence (Pref) est acquise par le capteur radar (2) dans l'environnement d'utilisation configuré.

9. Procédé (1) selon la revendication 7 ou 8, **caractérisé en ce que** l'impulsion de réflexion de référence (Pref) est déterminée pour différentes informations de distance mesurées, et pour la mise en œuvre du procédé (1), celle des impulsions de réflexion de référence (Pref) qui présente la meilleure concordance avec l'information de distance dans la situation de mesure concrète est utilisée.

10. Procédé (1) selon l'une quelconque des revendications 1 à 9, **caractérisé en ce qu'**au moins une première et une seconde impulsion de réflexion de référence (Pref) ayant respectivement une amplitude de référence (Aref), un temps de réception de référence (tref) et une courbe d'intensité de référence sont déterminées, et **en ce que** la première impulsion de réflexion de référence est utilisée lors de la première étape de détection partielle (9.3) et la seconde impulsion de réflexion de référence est utilisée lors de la seconde étape de détection partielle (9.4).

11. Procédé (1) selon l'une quelconque des revendications 1 à 10, **caractérisé en ce qu'**un nombre n des impulsions de réflexion (P) contenues dans le signal de réception (Pr) est déterminé, **en ce que**, lors de l'étape de détection initiale, n-1 maxima initiaux de la courbe d'amplitude du signal de réception (Pr) et leurs temps de réception initiaux sont déterminés, et les maxima initiaux sont définis comme valeurs des amplitudes déterminées et les temps de réception initiaux comme valeurs des temps de réception déterminés, **en ce qu'**un nombre correspondant de n étapes de détection partielle est exécuté lors de l'étape de détection (9), dans lequel, lors de la i-ième étape de détection partielle, la totalité des n-1 impulsions de réflexion de référence (P), à l'exception de la i-ième impulsion de réflexion de référence (Pi), sont soustraites du signal de réception (Pr), et le i-ième temps de réception déterminé (tidet) et la i-ième amplitude déterminée (Aidet) sont déterminés à partir du signal de réception de différence (Pr_diff) au moyen d'une détection de crête.

12. Capteur radar (2) destiné à la télémétrie, comprenant un élément d'émission (3) destiné à émettre un signal d'émission (Ps), un élément de réception (4) destiné à recevoir un signal de réception (Pr) et une unité de traitement de signal (5), dans lequel l'unité de traitement de signal (5) est conçue de telle sorte qu'elle met en œuvre le procédé (1) selon l'une quelconque des revendications 1 à 11 lors du fonctionnement du capteur radar (2).
